# EUROPÄISCHE PATENTSCHRIFT

(11) **EP 4 229 308 B1**
(45) Veröffentlichungstag und Bekanntmachung des Hinweises auf die Patenterteilung: **25.09.2024**
(21) Anmeldenummer: 21786370.3
(22) Anmeldetag: 29.09.2021
(51) Int. Cl.: F16B 37/14, F16B 12/14

(54) **AUFDOPPLUNGSBESCHLAG UND ZUGEHÖRIGE ANORDNUNG MIT ZWEI AUFGEDOPPELTEN PLATTEN**
DOUBLING-UP FITTING AND ASSOCIATED ASSEMBLY HAVING TWO DOUBLED-UP PLATES
RACCORD DE DOUBLAGE ET ENSEMBLE ASSOCIÉ COMPORTANT DEUX PLAQUES DE DOUBLAGE

(30) Priorität: 19.10.2020 DE 202020105956 U
(43) Veröffentlichungstag der Anmeldung: 23.08.2023
(73) Patentinhaber: Häfele Berlin GmbH & Co KG, 12307 Berlin (DE)
(72) Erfinder: SAWATZKI, Gerd, 45711 Datteln (DE)
(74) Vertreter: Kohler Schmid Möbus Patentanwälte
(86) Internationale Anmeldenummer: PCT/EP2021/076761
(87) Internationale Veröffentlichungsnummer: WO 2022/083989

(56) Entgegenhaltungen:
- DE-U1- 8 021 658

## Beschreibung

Die Erfindung betrifft einen Aufdopplungsbeschlag zum Justieren und Fixieren von zwei aufeinander aufliegenden ("aufgedoppelten") Platten, insbesondere von Möbelplatten, wie z.B. Schubladenfronten, Seitenverkleidungen oder Blenden.

Aufdopplungsbeschläge dienen beispielsweise zur Befestigung einer Frontplatte am restlichen Möbelkorpus, z.B. eine Klappenbefestigung am Möbelkorpus, und werden üblicherweise mittels Gewindebolzen an den Möbelkorpus angeschraubt. Dabei wird ein ringförmiges Beschlaggehäuse, das von einem Bolzenkopf des Gewindebolzens hintergriffen wird, in eine Sackbohrung der Frontplatte mit einem Einschlagwerkzeug (z.B. Hammer) eingeschlagen. Eine Hülsenmutter wird in eine Durchgangsbohrung im Möbelkorpus gesteckt und mit dem Gewindebolzen verschraubt. Der gegenüber dem Bolzendurchmesser größere lichte Öffnungsdurchmesser des Beschlaggehäuses erlaubt eine zweidimensionale Justierung der aufliegenden Frontplatte zum Möbelkorpus von z.B. ±2mm. Nach der Justierung wird die Hülsenmutter angezogen, bis die Frontplatte fest am Möbelkorpus anliegt. Bei diesen bekannten Aufdopplungsbeschlägen kann das Beschlaggehäuse nicht per Hand in die Sackbohrung eingesetzt werden, sondern muss mit einem Werkzeug eingeschlagen werden, um das Beschlaggehäuse fest in der Sackbohrung zu verankern.

Die Druckschrift DE 80 21 658 U1 offenbart einen Aufdopplungsbeschlag mit einer Spreizhülse und einer Spreizlasche.

Demgegenüber liegt der Erfindung die Aufgabe zugrunde, einen Aufdopplungsbeschlag anzugeben, der leicht und einfach ohne Einschlagwerkzeug montiert werden kann.

Diese Aufgabe wird erfindungsgemäß durch einen Aufdopplungsbeschlag gelöst, der aufweist:
- eine Spreizhülse, die einen Hülsenboden mit einer Hülsenbodenöffnung und mindestens eine radial nach außen aufspreizbare Spreizlasche aufweist,
- einen Innenring, der in der Spreizhülse in einer Anzugsrichtung in Richtung hin zum Hülsenboden axial verschiebbar ist, um die mindestens eine Spreizlasche radial nach außen aufzuspreizen,
- einen Gewindebolzen mit einem Gewinde und mit einem Bolzenkopf, der den Innenring in der Anzugsrichtung hintergreift, und
- ein mit dem Gewinde des Gewindebolzens verschraubbares Gewindeteil mit einem verbreiterten Kopf,
wobei der Öffnungsdurchmesser der Hülsenbodenöffnung und der lichte Öffnungsdurchmesser des Innenrings jeweils größer als der Bolzendurchmesser des Gewindebolzens sind. Vorzugsweise ist der Innenring in der Spreizhülse in Anzugsrichtung bis zur Anlage an den Hülsenboden axial verschiebbar, um die mindestens eine Spreizlasche radial nach außen aufzuspreizen.

Der erfindungsgemäße Aufdopplungsbeschlag erlaubt es, aufeinander aufliegende, aufgedoppelte Platten, wie z.B. Schubladenfronten, Seitenverkleidungen oder Blenden, zweidimensional zu justieren und in der jeweils justierten Position zu fixieren. Die Spreizhülse lässt sich per Hand, also werkzeuglos, in eine Bohrung in einer Platte einsetzen, wobei bei der weiteren Montage die mindestens eine Spreizlasche von dem Innenring aufgespreizt wird, um dadurch die Spreizhülse in der Bohrung zu verankern.

Bevorzugt steht die mindestens eine Spreizlasche im nichtgespreizten Zustand radial nach innen in das Hülseninnere vor, um so mit dem Innenring zusammenzuwirken. Außerdem kann die mindestens eine Spreizlasche im nichtgespreizten Zustand radial nach außen über die Hülsenwand vorstehen, so dass beim Einsetzen der Spreizhülse in eine passgenaue Bohrung die mindestens eine Spreizlasche gegen die Wirkung einer Rückstellkraft elastisch radial nach innen ausgelenkt wird, wodurch die Spreizhülse nach dem Einsetzen bereits in der Bohrung vorfixiert ist.

Besonders bevorzugt verlaufen die Innenseite der mindestens einen Spreizlasche und/oder die Außenseite des Innenrings, gesehen in Anzugsrichtung, schräg oder konisch radial nach innen, um durch Heranziehen des Innenrings die mindestens eine Spreizlasche radial nach außen aufzuspreizen.

Die mindestens eine Spreizlasche kann in der Hülsenwand freigespart sein. Vorteilhaft verläuft die Achse, um welche die mindestens eine Spreizlasche beim Aufspreizen ausgelenkt wird, tangential zur Hülsenwand der Spreizhülse.

In einer Ausführungsform des erfindungsgemäßen Aufdopplungsbeschlags weist der Innenring einen Ringboden mit einer Ringbodenöffnung auf, die den lichten Öffnungsdurchmesser des Innenrings ausbildet. Der Bolzenkopf hintergreift den Ringboden in Anzugsrichtung, um den Innenring in der Anzugsrichtung mitzunehmen.

Besonders bevorzugt weist die Spreizhülse mehrere, insbesondere drehsymmetrisch um die Längsachse der Spreizhülse herum angeordnete, Spreizlaschen auf.

Das Gewindeteil kann vorteilhaft einen einfachen oder kreuzförmigen Betätigungsschlitz oder eine Betätigungskontur, wie z.B. einen Innen- oder Außenmehrkant, aufweisen, um das Gewindeteil mithilfe eines Werkzeuges verdrehen zu können.

Vorzugsweise ist das Gewindeteil, sofern der Gewindebolzen ein Außengewinde aufweist, als Hülsen- oder Schaftmutter ausgebildet, aber kann, sofern der Gewindebolzen ein Innengewinde aufweist, alternativ auch als Schaftschraube ausgebildet sein.

Die Erfindung betrifft in einem weiteren Aspekt auch eine Anordnung mit zwei aufeinander liegenden Platten, insbesondere Möbelplatten, und mit einem wie oben beschriebenen Aufdopplungsbeschlag, wobei die Spreizhülse, der Innenring und der Gewindebolzen mit dem Bolzenkopf voran in eine Sackbohrung in der einen, ersten Platte und das Gewindeteil in eine Bohrung in der anderen, zweiten Platte eingesetzt und miteinander verschraubt sind und wobei die mindestens eine Spreizlasche von dem Innenring radial nach außen gegen die Wand der Sackbohrung der ersten Platte aufgespreizt ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: den erfindungsgemäße Aufdopplungsbeschlag in einer Explosionsdarstellung (Fig. 1a) sowie in einem Längsschnitt (Fig. 1b) ohne einen in Fig. 1a gezeigten Innenring; und
- Fig. 2: eine erfindungsgemäße Anordnung mit zwei mittels des Aufdopplungsbeschlags justierten, aufgedoppelten Möbelplatten.

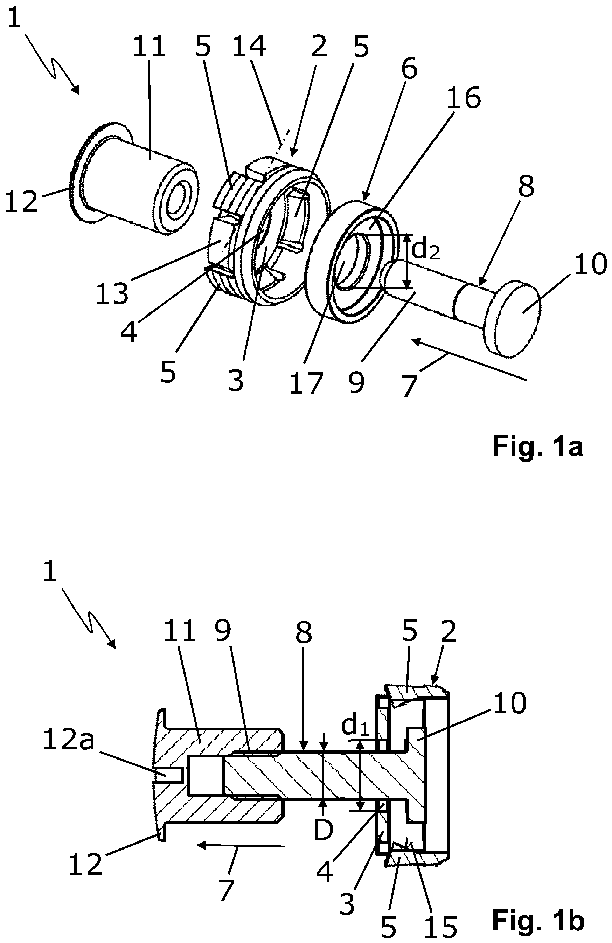

Der in **Fign. 1a, 1b** gezeigte Aufdopplungsbeschlag **1** dient zum zweidimensionalen Justieren und Fixieren von zwei aufgedoppelten Möbelplatten, wie z.B. Schubladenfronten, Seitenverkleidungen oder Blenden.

Der Aufdopplungsbeschlag 1 weist folgende Einzelteile auf:
- eine Spreizhülse **2** aus z.B. Kunststoff (Außendurchmesser z.B. 15 mm), die einen Hülsenboden **3** mit einer Hülsenbodenöffnung **4** und mehrere radial nach außen aufspreizbare Spreizlaschen **5** aufweist, welche drehsymmetrisch um die Längsachse der Spreizhülse 2 herum angeordnet sind,
- einen Innenring **6** aus z.B. Kunststoff, der in der Spreizhülse 2 in einer Anzugsrichtung **7** in Richtung hin zur Anlage an den Hülsenboden 3 axial verschiebbar ist, um die Spreizlaschen 5 radial nach außen aufzuspreizen,
- einen Gewindebolzen **8** mit einem Außengewinde **9** und mit einem Bolzenkopf **10,** der den Innenring 6 in der Anzugsrichtung 7 hintergreift, und
- ein auf das Außengewinde 9 des Gewindebolzens 8 schraubbares Gewindeteil in Form einer Schaft- oder Hülsenmutter **11** (z.B. Außendurchmesser 10 mm) mit einem verbreiterten Hülsenkopf **12,** welcher einen Betätigungsschlitz **12a** aufweist.

Die Spreizlaschen 5 sind in der Hülsenwand **13** der Spreizhülse 2 freigespart, wobei die Achsen **14,** um welche die Spreizlaschen 5 beim Aufspreizen jeweils ausgelenkt werden, tangential zur Hülsenwand 13 verlaufen. Im nichtgespreizten Zustand stehen die Spreizlaschen 5 über die Hülsenwand 13 radial nach außen vor sowie auch in das Hülseninnere radial nach innen vor, wobei die Innenseiten **15** der Spreizlaschen 5, gesehen in Anzugsrichtung 7, schräg oder konisch radial nach innen verlaufen. Alternativ oder zusätzlich kann auch die mit den Innenseiten 15 der Spreizlaschen 5 zusammenwirkende Außenseite des Innenrings 6, gesehen in Anzugsrichtung 7, schräg oder konisch radial nach innen verlaufen, um die Spreizlaschen 5 radial nach außen aufzuspreizen.

Der Innenring 6 hat einen Ringboden **16** mit einer Ringbodenöffnung **17,** in die der Gewindebolzen 8 eingeführt ist, um mit dem Bolzenkopf 10 den Ringboden 16 in Anzugsrichtung 7 zu hintergreifen.

Der Öffnungsdurchmesser **d1** der Hülsenbodenöffnung 4 und der Öffnungsdurchmesser **d2** der Ringbodenöffnung 17 sind jeweils größer als der Bolzendurchmesser **D** des Gewindebolzens 8.

Statt dem gezeigten Betätigungsschlitz 13 kann die Hülsenmutter 11 auch einen Innenmehrkant (z.B. Innensechskant) oder eine polygonale Außenkontur (z.B. Außenmehrkant) aufweisen, um die Hülsenmutter 11 mithilfe eines Werkzeuges verdrehen zu können. Statt dem gezeigten Außenwinde 9 kann der Gewindebolzen 8 auch eine Gewindebohrung mit Innengewinde aufweisen, in das ein als Schaftschraube mit verbreitertem Schraubenkopf ausgebildetes Gewindeteil eingeschraubt wird.

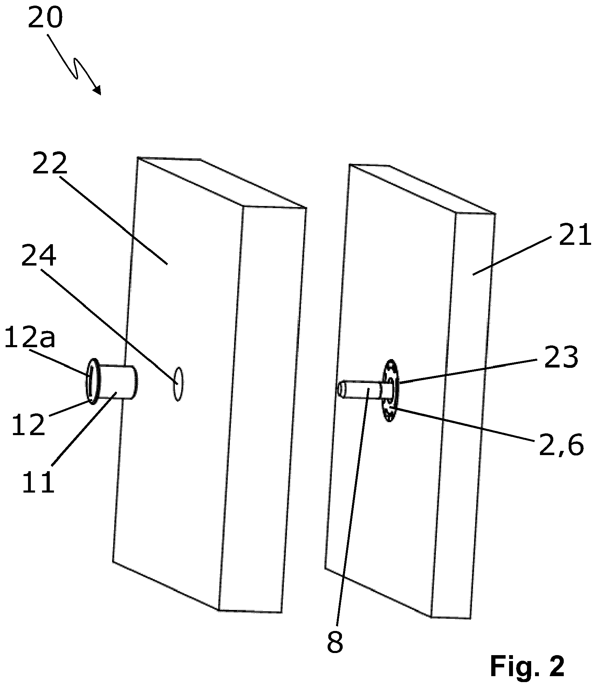

In **Fig. 2** ist eine Anordnung **20** mit zwei aufeinander aufliegenden ("aufgedoppelten"), mittels des Aufdopplungsbeschlags 1 justierten und fixierten Möbelplatten **21, 22** gezeigt. In die außenseitige Möbelplatte 21 (z.B. aus Holzwerkstoff) ist eine Sackbohrung **23** mit einem dem Außendurchmesser der Spreizhülse 2 entsprechenden Bohrungsdurchmesser (hier 15 mm) und in die innenseitige Möbelplatte 22 eine (Durchgangs)Bohrung **24** mit einem dem Schaftdurchmesser der Hülsenmutter 11 entsprechenden Bohrungsdurchmesser (hier 10 mm) gebohrt. Die Spreizhülse 2, der Innenring 6 und der Gewindebolzen 8 mit dem Bolzenkopf 10 voran sind in die Sackbohrung 23 eingesetzt. Dabei sind die radial nach außen über die Hülsenwand 13 vorstehenden Spreizlaschen 5 gegen die Wirkung einer Rückstellkraft elastisch radial nach innen ausgelenkt, wodurch diese Baugruppe nach dem Einsetzen bereits in der Sackbohrung 23 vorfixiert ist. Die Hülsenmutter 11 ist in die Durchgangsbohrung 24 eingesteckt und auf den Gewindebolzen 8 aufgeschraubt, bis der Hülsenkopf 12 an der innenliegenden Möbelplatte 22 anliegt.

Die gegenüber dem Bolzendurchmesser D größeren Öffnungsdurchmesser d1, d2 der Hülsenbodenöffnung 4 und der Ringbodenöffnung 17 erlauben eine zweidimensionale Justierung der aufeinander aufliegenden Möbelplatten 21, 22 von z.B. ±2mm. Bei der finalen Befestigung durch Anziehen der Hülsenmutter 11 wird der Innenring 6 bis zur Anlage an den Hülsenboden 3 herangezogen, wodurch die Spreizlaschen 5 radial nach außen gegen die Wand der Sackbohrung 23 aufgespreizt und in die Wand der Sackbohrung 23 gedrückt werden. Die justierten, aufgedoppelten Möbelplatten 21, 22 sind nun fest miteinander verbunden.

Statt wie gezeigt vierteilig kann der Aufdopplungsbeschlag 1 auch dreiteilig ausgebildet sein, indem die Spreizhülse 2 und der Innenring 6 zunächst als ein gemeinsames Spritzgussteil mit einer oder mehreren Sollbruchstellen gefertigt sind, welche dann beim Anziehen der Hülsenmutter 11 aufgebrochen werden.

## Patentansprüche

1. Aufdopplungsbeschlag (1) aufweisend
- eine Spreizhülse (2), die einen Hülsenboden (3) mit einer Hülsenbodenöffnung (4) und mindestens eine radial nach außen aufspreizbare Spreizlasche (5) aufweist, **dadurch gekennzeichnet, dass** der Aufdopplungsbeschlag (1) ferner aufweist:
- einen Innenring (6), der in der Spreizhülse (2) in einer Anzugsrichtung (7) in Richtung hin zum Hülsenboden (3) axial verschiebbar ist, um die mindestens eine Spreizlasche (5) radial nach außen aufzuspreizen,
- einen Gewindebolzen (8) mit einem Gewinde (9) und mit einem Bolzenkopf (10), der den Innenring (6) in der Anzugsrichtung (7) hintergreift, und
- ein mit dem Gewinde (9) des Gewindebolzens (8) verschraubbares Gewindeteil (11) mit einem verbreiterten Kopf (12),
wobei der Öffnungsdurchmesser (d1) der Hülsenbodenöffnung (4) und der lichte Öffnungsdurchmesser (d2) des Innenrings (6) jeweils größer als der Bolzendurchmesser (D) des Gewindebolzens (8) sind.

2. Aufdopplungsbeschlag nach Anspruch 1, **dadurch gekennzeichnet, dass** der Innenring (6) in der Spreizhülse (2) in Anzugsrichtung (7) bis zur Anlage an den Hülsenboden (3) axial verschiebbar ist, um die mindestens eine Spreizlasche (5) radial nach außen aufzuspreizen.

3. Aufdopplungsbeschlag nach Anspruch 1 oder 2, **dadurch gekennzeichnet, dass** die mindestens eine Spreizlasche (5) im nichtgespreizten Zustand radial nach innen in das Hülseninnere vorsteht.

4. Aufdopplungsbeschlag nach einem der vorhergehenden Ansprüche, **dadurch gekennzeichnet, dass** die mindestens eine Spreizlasche (5) im nichtgespreizten Zustand radial nach außen über die Hülsenwand (13) vorsteht.

5. Aufdopplungsbeschlag nach einem der vorhergehenden Ansprüche, **dadurch gekennzeichnet, dass** die Innenseite der mindestens einen Spreizlasche (5) und/oder die Außenseite des Innenrings (6), gesehen in Anzugsrichtung (7), schräg oder konisch radial nach innen verlaufen.

6. Aufdopplungsbeschlag nach einem der vorhergehenden Ansprüche, **dadurch gekennzeichnet, dass** die mindestens eine Spreizlasche (5) in der Hülsenwand (13) freigespart ist.

7. Aufdopplungsbeschlag nach einem der vorhergehenden Ansprüche, **dadurch gekennzeichnet, dass** die Achse (14), um welche die mindestens eine Spreizlasche (5) beim Aufspreizen ausgelenkt wird, tangential zur Hülsenwand (13) der Spreizhülse (2) verläuft.

8. Aufdopplungsbeschlag nach einem der vorhergehenden Ansprüche, **dadurch gekennzeichnet, dass** der Innenring (6) einen Ringboden (16) aufweist, dass der lichte Öffnungsdurchmesser (d2) des Innenrings (6) durch eine Ringbodenöffnung (17) in dem Ringboden (16) gebildet ist und dass der Bolzenkopf (10) den Ringboden (16) in Anzugsrichtung (7) hintergreift.

9. Aufdopplungsbeschlag nach einem der vorhergehenden Ansprüche, **dadurch gekennzeichnet, dass** die Spreizhülse (2) mehrere, insbesondere drehsymmetrisch um die Längsachse der Spreizhülse (2) herum angeordnete, Spreizlaschen (3) aufweist.

10. Aufdopplungsbeschlag nach einem der vorhergehenden Ansprüche, **dadurch gekennzeichnet, dass** das Gewindeteil (11) einen Betätigungsschlitz (13) oder eine Betätigungskontur aufweist.

11. Aufdopplungsbeschlag nach einem der vorhergehenden Ansprüche, **dadurch gekennzeichnet, dass** das Gewindeteil (11) als Hülsen- oder Schaftmutter ausgebildet ist.

12. Anordnung (20) mit zwei aufeinander liegenden Platten (21, 22), insbesondere Möbelplatten, und mit einem Aufdopplungsbeschlag (1) nach einem der vorhergehenden Ansprüche, wobei die Spreizhülse (2), der Innenring (6) und der Gewindebolzen (8) mit dem Bolzenkopf (10) voran in eine Sackbohrung (23) in der einen, ersten Platte (21) und das Gewindeteil (11) in eine Bohrung (24) in der anderen, zweiten Platte (22) eingesetzt und miteinander verschraubt sind und wobei die mindestens eine Spreizlasche (5) von dem Innenring (6) radial nach außen gegen die Wand der Sackbohrung (23) der ersten Platte (21) aufgespreizt ist.

## Claims

1. A doubling-up fitting (1) comprising:
- an expansion sleeve (2) which has a sleeve base (3) with a sleeve base opening (4) and has at least one expansion tab (5) which can be spread radially outward,
**characterized in that** the doubling-up fitting (1) further comprises:
- an inner ring (6) which is axially displaceable in the expansion sleeve (2) towards the sleeve base (3) in a tightening direction (7) in order to spread the at least one expansion tab (5) radially outward;
- a threaded bolt (8) with a screw thread (9) and with a bolt head (10) which engages behind the inner ring (6) in the tightening direction (7); and
- a threaded part (11) which has a widened head (12) and can be screwed to the screw thread (9) of the threaded bolt (8);
wherein the opening diameter (d1) of the sleeve base opening (4) and the clear opening diameter (d2) of the inner ring (6) are each greater than the bolt diameter (D) of the threaded bolt (8).

2. The doubling-up fitting as claimed in claim 1, **characterized in that** the inner ring (6) is axially displaceable in the expansion sleeve (2) in the tightening direction (7) as far as contact with the sleeve base (3), in order to spread the at least one expansion tab (5) radially outward.

3. The doubling-up fitting as claimed in claim 1 or 2, **characterized in that** in the unspread state, the at least one expansion tab (5) protrudes radially inward into the sleeve interior.

4. The doubling-up fitting as claimed in any of the preceding claims, **characterized in that** in the unspread state, the at least one expansion tab (5) protrudes radially outward beyond the sleeve wall (13).

5. The doubling-up fitting as claimed in any of the preceding claims, **characterized in that** the inside of the at least one expansion tab (5) and/or the outside of the inner ring (6) run obliquely or conically radially inward, viewed in the tightening direction (7).

6. The doubling-up fitting as claimed in any of the preceding claims, **characterized in that** the at least one expansion tab (5) is cut out of the sleeve wall (13).

7. The doubling-up fitting as claimed in any of the preceding claims, **characterized in that** the axis (14) about which the at least one expansion tab (5) is deflected on spreading runs tangentially to the sleeve wall (13) of the expansion sleeve (2).

8. The doubling-up fitting as claimed in any of the preceding claims, **characterized in that** the inner ring (6) has a ring base (16), that the clear opening diameter (d2) of the inner ring (6) is formed by a ring base opening (17) in the ring base (16), and that the bolt head (10) engages behind the ring base (16) in the tightening direction (7).

9. The doubling-up fitting as claimed in any of the preceding claims, **characterized in that** the expansion sleeve (2) comprises multiple expansion tabs (5) which are arranged in particular rotationally symmetrically about the longitudinal axis of the expansion sleeve (2).

10. The doubling-up fitting as claimed in any of the preceding claims, **characterized in that** the threaded part (11) has an actuating slot (13) or an actuating contour.

11. The doubling-up fitting as claimed in any of the preceding claims, **characterized in that** the threaded part (11) is configured as a sleeve nut or shank nut.

12. An assembly (20) with two plates (21, 22) lying on one another, in particular furniture plates, and with a doubling-up fitting (1) as claimed in any of the preceding claims, wherein the expansion sleeve (2), the inner ring (6) and the threaded bolt (8) with the bolt head (10) first are inserted in a blind bore (23) in the one first plate (21), and the threaded part (11) is inserted in a bore (24) in the other second plate (22), and then screwed together, and wherein the at least one expansion tab (5) is spread by the inner ring (6) radially outward against the wall of the blind bore (23) of the first plate (21).

## Revendications

1. Raccord de doublage (1), présentant
- un manchon d'expansion (2) présentant un culot de manchon (3) muni d'une ouverture de culot de manchon (4) et au moins une patte d'expansion (5) pouvant être écartée radialement vers l'extérieur,
**caractérisé en ce que** le raccord de doublage (1) présente en outre :
- une bague intérieure (6) pouvant coulisser axialement dans le manchon d'expansion (2) vers le culot de manchon (3) dans une direction de serrage (7) afin d'écarter la au moins une patte d'expansion (5) radialement vers l'extérieur,
- un boulon fileté (8) muni d'un filetage (9) et d'une tête de boulon (10) qui vient en prise derrière la bague intérieure (6) dans la direction de serrage (7), et
- une partie filetée (11) pouvant être vissée sur le filetage (9) du boulon fileté (8) et munie d'une tête (12) élargie,
le diamètre d'ouverture (d1) de l'ouverture de culot de manchon (4) et le diamètre intérieur d'ouverture (d2) de la bague intérieure (6) étant respectivement supérieurs au diamètre de boulon (D) du boulon fileté (8).

2. Raccord de doublage selon la revendication 1, **caractérisé en ce que** la bague intérieure (6) peut coulisser axialement dans le manchon d'expansion (2) dans la direction de serrage (7) jusqu'à venir en appui sur le culot de manchon (3) afin d'écarter la au moins une patte d'expansion (5) radialement vers l'extérieur.

3. Raccord de doublage selon la revendication 1 ou 2, **caractérisé en ce que**, lorsqu'elle n'est pas écartée, la au moins une patte d'expansion (5) fait saillie vers l'intérieur radialement vers l'intérieur du manchon.

4. Raccord de doublage selon l'une quelconque des revendications précédentes, **caractérisé en ce que**, lorsqu'elle n'est pas écartée, la au moins une patte d'expansion (5) fait saillie radialement vers l'extérieur au-delà de la paroi de manchon (13).

5. Raccord de doublage selon l'une quelconque des revendications précédentes, **caractérisé en ce que** le côté intérieur de la au moins une patte d'expansion (5) et/ou le côté extérieur de la bague intérieure (6), vu dans la direction de serrage (7), s'étendent radialement vers l'intérieur de manière oblique ou conique.

6. Raccord de doublage selon l'une quelconque des revendications précédentes, **caractérisé en ce que** la au moins une patte d'expansion (5) est ménagée dans la paroi du manchon (13).

7. Raccord de doublage selon l'une quelconque des revendications précédentes, **caractérisé en ce que** l'axe (14) autour duquel la au moins une patte d'expansion (5) est déviée lors de l'écartement s'étend tangentiellement à la paroi de manchon (13) du manchon d'expansion (2).

8. Raccord de doublage selon l'une quelconque des revendications précédentes, **caractérisé en ce que** la bague intérieure (6) présente un fond de bague (16), **en ce que** le diamètre intérieur d'ouverture (d2) de la bague intérieure (6) est formé dans le fond de bague (16) à travers une ouverture de fond de bague (17) et **en ce que** la tête de boulon (10) vient en prise derrière le fond de bague (16) dans la direction de serrage (7).

9. Raccord de doublage selon l'une quelconque des revendications précédentes, **caractérisé en ce que** le manchon d'expansion (2) présente plusieurs pattes d'expansions (3), en particulier agencées autour de l'axe longitudinal du manchon d'expansion (2) de manière à présenter une symétrie de rotation.

10. Raccord de doublage selon l'une quelconque des revendications précédentes, **caractérisé en ce que** la partie filetée (11) présente une fente d'actionnement (13) ou un contour d'actionnement.

11. Raccord de doublage selon l'une quelconque des revendications précédentes, **caractérisée en ce que** la partie filetée (11) est réalisée sous forme d'écrou douille ou d'écrou relieur.

12. Agencement (20) comprenant deux plaques (21, 22) superposées, en particulier des plaques de meubles, et un raccord de doublage (1) selon l'une quelconque des revendications précédentes, le manchon d'expansion (2), la bague intérieure (6) et le boulon fileté (8) muni de la tête de boulon (10) étant insérés dans un alésage borgne (23) de première plaque (21) et la partie filetée (11) étant insérée dans un trou (24) de la seconde plaque (22) et l'ensemble étant vissé, et la au moins une patte d'expansion (5) étant écartée radialement vers l'extérieur par la bague intérieure (6) contre la paroi de l'alésage borgne (23) de la première plaque (21).
